# FASCICULE DE BREVET EUROPEEN

(11) **EP 0 782 320 B1**
(45) Date de publication et mention de la délivrance du brevet: **16.08.2001**
(21) Numéro de dépôt: 96402692.6
(22) Date de dépôt: 11.12.1996
(51) Int. Cl.: H04N 1/00

(54) **Télécopieur associé à un poste téléphonique à sensibilité ajustable**
Faksimilegerät verbunden mit einem Fernsprechendgerät, das eine einstellbare Empfindlichkeit hat
Facsimile device associated with a telephone handset with adjustable sensitivity

(30) Priorité: 28.12.1995 FR 9515669
(43) Date de publication de la demande: 02.07.1997
(73) Titulaire: SAGEM SA, 75783 Paris Cédex 16 (FR)
(72) Inventeur: Sabatier, Pierre, 95800 Cergy Saint Christophe (FR); Darnault, Patrick, 95000 Cergy (FR)
(74) Mandataire: Bloch, Gérard

(56) Documents cités:
- WO-A-84/02818
- FR-A- 2 692 744
- GB-A- 2 278 754

## Description

Un télécopieur partage très souvent avec un poste téléphonique la ligne téléphonique le raccordant au réseau téléphonique commuté (RTC).

Lors de la réception d'un appel, le télécopieur prend provisoirement la ligne pour rechercher la présence d'une fréquence de signalisation émise par un télécopieur appelant. Dans l'affirmative, le télécopieur appelé répond et reçoit la télécopie ; sinon il considère qu'il s'agit d'un appel téléphonique et il commute la ligne sur le poste associé.

Comme les lignes téléphoniques présentent des longueurs très diverses, l'affaiblissement qu'elles entraînent se situe dans une large plage d'incertitude, de taille inacceptable pour la qualité phonique d'un conversation téléphonique.

Pour limiter cette plage, il est connu d'ajuster sommairement le gain du microphone du poste téléphonique. en le choisissant parmi deux valeurs possibles.

GB-A-2 287 754 décrit un téléphone relié à une ligne téléphonique avec adaptation de l'indépendance à la ligne. WO-A-84/02818 décrit un circuit de contrôle dans un modem pour amplifier le signal de ligne.

Si le poste téléphonique est téléalimenté à travers la ligne depuis le central RTC, un dispositif de mesure du courant continu de ligne fixe le gain à la valeur la plus élevée lorsqu'une baisse du courant continu de ligne, qui indique une longueur de ligne excessive, fait passer ce courant en dessous d'un seuil déterminé.

Dans le cas où le poste est relié à la ligne à travers le transformateur d'isolement du modem du télécopieur, le poste est alors alimenté, comme le télécopieur, par le secteur et c'est la mesure des signaux alternatifs reçus à travers le transformateur qui fixe le gain.

Cet ajustement de gain est cependant très imprécis et peu compatible avec les normes fixant le gabarit d'atténuation des signaux transmis. De plus, les tolérances des transducteurs du commerce accroissent encore la plage d'incertitude.

En outre, le coût des dispositifs de mesure et dispositif d'ajustement de gain nécessaires n'est pas négligeable.

La présente invention vise à limiter la plage d'incertitude et réduire le coût du matériel.

A cet effet, l'invention concerne un télécopieur agencé pour être relié à une ligne téléphonique par un modem et associé à un poste téléphonique avec des moyens pour ajuster la sensibilité du poste en fonction du courant continu de ligne, télécopieur caractérisé par le fait que le modem comporte des moyens de mesure de courant continu de ligne pour commander les moyens d'ajustement, afin de corriger l'affaiblissement des signaux phoniques échangés.

L'intégration des moyens de mesure du courant au modem du télécopieur limite ainsi le matériel nécessaire au poste téléphonique tout en offrant une grande souplesse d'analyse du courant de ligne et, par conséquent, de réglage de la sensibilité du poste.

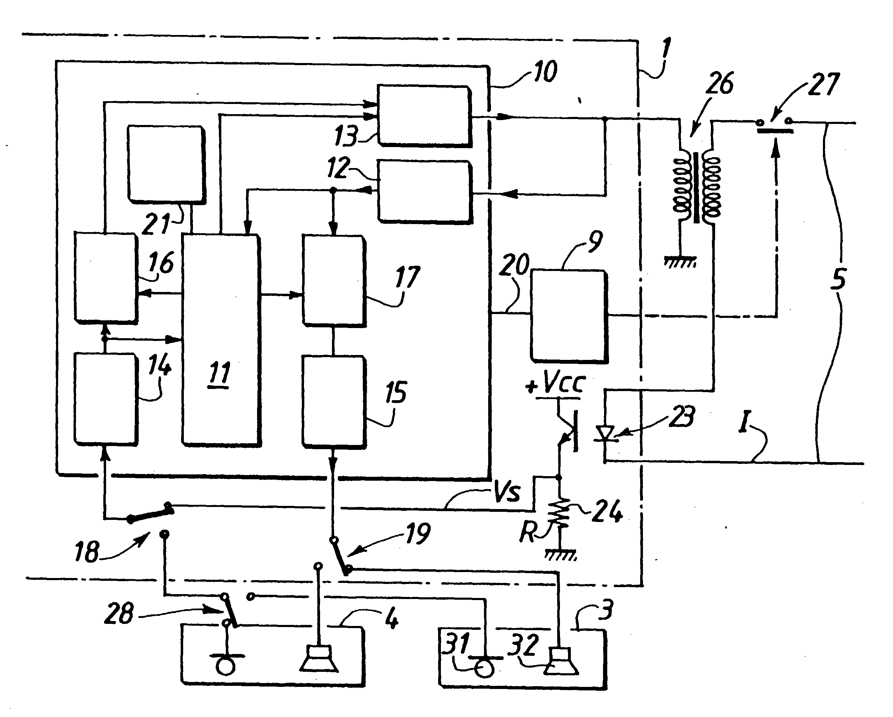

L'invention sera mieux comprise à l'aide de la description suivante du télécopieur de l'invention et du poste téléphonique associé, en référence à la figure unique du dessin annexé, qui les représente schématiquement.

Le télécopieur, représenté délimité par un cadre en pointillés 1, est relié à une ligne 5 du réseau téléphonique commuté et est associé à un poste téléphonique 3 et, dans cet exemple, à un répondeur téléphonique 4 ayant aussi ici une fonction d'enregistreur.

Le télécopieur 1 comporte un modem 10 comprenant un processeur de traitement de signal, DSP, 11 associé à un premier ensemble convertisseur analogique/numérique CAN 12 et convertisseur numérique/analogique CNA 13, relié au secondaire d'un transformateur d'isolation galvanique 26. Le primaire du transformateur 26 assure le bouclage de la ligne 5 à travers le contact d'un relais 27 commandé par une unité centrale 9 du télécopieur 1 reliée au modem 10 par un bus 20.

Un second ensemble convertisseur analogique/numérique CAN 14 et convertisseur numérique/analogique CNA 15 associé au DSP 11 est relié à un poste téléphonique 3 et à un répondeur 4. Un multiplieur 16, de réglage de sensibilité phonique en émission, relie la sortie du CNA 14 à l'entrée du CNA 13, tandis qu'un multiplieur 17, de réglage de sensibilité en réception, relie la sortie du CAN 12 à l'entrée du CNA 15. Le DSP 11, relié aux convertisseurs 12-14, commande les multiplieurs 16 et 17. En outre, le CNA 14 est relié en entrée, à travers une borne d'un circuit commutateur inverseur 18, à l'émetteur du transistor d'un photo-coupleur 23 rappelé à la masse par une résistance 24 de valeur R, transistor dont le collecteur est relié à la tension d'alimentation continue +Vcc des circuits du télécopieur 1.

La diode photo-émettrice du photocoupleur 23 est montée en série sur la ligne 5. Les circuits usuels de protection, et éventuellement de redressement, associés à la diode photo-émettrice n'ont pas été représentés.

Un autre circuit commutateur inverseur 19 relie la sortie du CNA 15 à l'écouteur 32 du poste 3 ou à son équivalent dans le répondeur 4. Un relais inverseur 28 assure la liaison, par une autre borne de l'inverseur 18, entre l'entrée du CAN 14 et le microphone 31 du poste 3 ou l'émetteur phonique du répondeur 4. L'unité centrale 9 commande les inverseurs 18, 19 et 28.

Le fonctionnement du montage ci-dessus va maintenant être expliqué.

Lorsqu'une communication a été établie sur la ligne 5 pour une transmission de télécopie, le DSP 11 assure une fonction de modem, c'est-à-dire engendre et reconnaît numériquement des fréquences déterminées. Les convertisseurs CAN 12 et CNA 13 et le DSP 11 fonctionnent toujours dans les mêmes conditions, c'est-à-dire avec un gain fixe.

Lorsqu'il s'agit d'une liaison téléphonique mettant en jeu le poste 3, le microphone 31 et l'écouteur 32 de celui-ci sont respectivement reliés, par les circuits inverseurs 18 et 19, au CAN 14 et au CNA 15, sous la commande de l'unité centrale 9.

Le CAN 14 est aussi relié à la sortie du photo-coupleur 23, c'est-à-dire que le CAN 14 fonctionne, dans cet exemple, en temps partagé, sous la commande du circuit 18, pour échantillonner alternativement le signal issu du microphone 31 et celui issu du photo-coupleur 23.

On rappellera qu'un photo-coupleur est un circuit présentant une résistance d'isolement élevée entre sa diode d'entrée, photo-émettrice, et le transistor de sortie qu'elle illumine pour le rendre conducteur. En outre, l'illumination croît selon une loi connue avec le courant diode et autorise le passage d'un courant sensiblement proportionnel à celui-ci.

Ici, le courant traversant le transistor du photo-coupleur 23 engendre une tension Vs = K.R.I proportionnelle à celui-ci aux bornes de la résistance 24, c'est-à-dire image du courant de ligne I. Après conversion en numérique (14), le DSP 11, disposant de la valeur K de conversion du photocoupleur 23, détermine la valeur du courant de ligne I.

La valeur du courant I déterminée de façon numérique sert alors à adresser une table double 21 de valeurs de gains, fournissant à chaque fois deux coefficients multiplicatifs K1 et K2. La table 21 prend en compte les éventuelles non linéarités du photocoupleur 23, c'est-à-dire les variations du coefficient K avec le courant I.

Le premier coefficient, K1, commande le multiplieur 16 tandis que le second coefficient, K2, commande le multiplieur 17. L'affaiblissement des signaux phoniques échangés en ligne peut ainsi être estimé de façon précise par la mesure du courant I de ligne et corrigé automatiquement en ajustant la sensibilité du poste téléphonique 3.

Le poste 3 est alors relié à la ligne 5 à travers les circuits 14-17 commandés par le DSP 11, les circuits CAN et CNA 12 et 13 et le transformateur 26. Hormis les circuits CAN et CNA nécessités par le fait que le traitement du signal est numérique dans cet exemple, on comprendra donc que le poste téléphonique est en fait constitué de l'ensemble 3, essentiellement un combiné avec clavier, et des circuits 16 et 17 de réglage de sensibilité.

Il convient cependant de remarquer que la représentation, par des multiplieurs, des circuits traitant les signaux phoniques est très schématique et qu'en fait c'est le DSP 11 qui assure la fonction des multiplieurs 16 et 17 en effectuant, de façon connue, un traitement du signal qui peut être plus complexe qu'une simple multiplication et peut par exemple comprendre un filtrage, comme cela est indiqué plus loin.

L'alimentation du poste 3 est ici assurée à partir du secteur, tout comme pour le télécopieur 1. Il aurait cependant pu être prévu de relier le poste téléphonique directement à la ligne 5, en y intégrant des moyens de réglage de sensibilité, commandés par le DSP 11 à travers des moyens d'isolement.

L'isolement en continu recherché peut être assuré par d'autres moyens qu'un photo-coupleur, et par exemple par un transformateur. En particulier, le transformateur 26 peut avoir la fonction de miroir de courant du photo-coupleur 23.

Dans cet exemple, le DSP 11 assure aussi, dans la plage des fréquences phoniques, un ajustement complémentaire, ou modulation, de la sensibilité en fonction de la fréquence et corrige ainsi les distorsions d'amplitude dues à la ligne ou à des filtres, en fonction de la fréquence de chaque composante du signal phonique dans la plage phonique, ou vocale, prévue par les normes. Une correction de temps de propagation de groupe peut aussi être prévue.

En outre, le DSP 11 effectue un filtrage d'élimination des échos se superposant au signal phonique utile et en particulier a une fonction d'effet "anti-local" contre l'effet Larsen.

La commande de la sensibilité du répondeur 4 obéit au principe exposé précédemment pour le poste 3 et n'est donc pas expliquée plus avant.

Il peut de même être prévu de commander de la sorte un haut-parleur d'écoute amplifiée et un microphone associé.

## Revendications

1. Télécopieur agencé pour être relié à une ligne téléphonique (5) par un modem (10) et associé à un poste téléphonique (3) avec des moyens (14-17) pour ajuster la sensibilité du poste en fonction du courant continu de la ligne, télécopieur caractérisé par le fait que le modem (10) comporte des moyens (11) de mesure de courant continu de ligne pour commander les moyens d'ajustement (14-17), afin de corriger l'affaiblissement des signaux phoniques échangés.

2. Télécopieur selon la revendication 1, dans lequel les moyens d'ajustement (14-17) comportent un convertisseur analogique/numérique et/ou numérique/analogique (14, 15).

3. Télécopieur selon l'une des revendications 1 et 2, dans lequel le modem (10) est agencé pour moduler la sensibilité ajustée en fonction de la fréquence, dans une plage de fréquences vocales.

4. Télécopieur selon l'une des revendications 1 à 3, dans lequel le modem (10) est agencé pour effectuer un filtrage d'élimination d'échos.

5. Télécopieur selon l'une des revendications 1 à 4, dans lequel le modem (10) est agencé pour effectuer un filtrage d'élimination de l'effet Larsen.

6. Télécopieur selon l'une des revendications 1 à 5, dans lequel le modem (10) est associé à des moyens de commutation (18, 19) pour commander l'ajustement de sensibilité d'un répondeur téléphonique (4).

## Patentansprüche

1. Telefaxgerät, das zum Anschluß an eine Telefonleitung (5) über ein Modem (10) und zur Verbindung mit einer Fernsprechstelle (3) ausgebildet ist, mit Mitteln (14- 17) zum Einstellen der Empfindlichkeit der Fernsprechstelle als Funktion des Gleichstroms der Leitung, wobei das Telefaxgerät dadurch gekennzeichnet ist, daß das Modem (10) Mittel (11) zur Messung des Leitungsgleichstroms zur Steuerung der Einstellmittel (14 - 17) aufweist, um die Abschwächung der ausgetauschten phonischen Signale zu korrigieren.

2. Telefaxgerät nach Anspruch 1, wobei die Einstellmittel (14 - 17) einen Analog-Digital-Wandler und/oder einen Digital-Analog-Wandler (14, 15) aufweisen.

3. Telefaxgerät nach Anspruch 1 oder 2, wobei das Modem (10)zum Modulieren der eingestellten Empfindlichkeit als Funktion der Frequenz in einem Sprachfrequenzbereich ausgebildet ist.

4. Telefaxgerät nach einem der Ansprüche 1 bis 3, wobei das Modem (10) derart ausgebildet ist, um eine Filterung zur Beseitigung von Echos durchzuführen.

5. Telefaxgerät nach einem der Ansprüche 1 bis 4, wobei das Modem (10) derart ausgebildet ist, um eine Filterung zur Beseitigung des Larsen-Effektes durchzuführen.

6. Telefaxgerät nach einem der Ansprüche 1 bis 5, wobei das Modem (10) mit Schaltermitteln (18, 19) gekoppelt ist, um die Einstellung der Empfindlichkeit eines Anrufbeantworters (4) zu steuern.

## Claims

1. Facsimile device arranged to be connected to a telephone line (5) via a modem (10) and associated with a telephone handset (3), with means (14-17) for adjusting the sensitivity of the handset in dependence on the direct current of the line, a facsimile device characterised by the fact that the modem (10) comprises means (11) for measuring the direct current of the line to control adjusting means (14-17), in order to correct the attenuation of the acoustic signals exchanged

2. Facsimile device according to claim 1, wherein the adjusting means (14-17) comprise an analogue-to-digital and/or digital-to-analogue converter (14-15).

3. Facsimile device according to one of claims 1 and 2, wherein the modem (10) is arranged to modulate the adjusted sensitivity in dependence on the frequency, in a range of voice frequencies.

4. Facsimile device according to one of claims 1 to 3, wherein the modem (10) is arranged to carry out filtering to suppress echoes.

5. Facsimile device according to one of claims 1 to 4, wherein the modem (10) is arranged to carry out filtering to eliminate the Larsen effect.

6. Facsimile device according to one of claims 1 to 5, wherein the modem (10) is associated with switching means (18, 19) to control the sensitivity adjustment of a telephone answering machine (4).
